# EUROPÄISCHE PATENTSCHRIFT

(11) **EP 2 570 257 B1**
(45) Veröffentlichungstag und Bekanntmachung des Hinweises auf die Patenterteilung: **12.05.2021**
(21) Anmeldenummer: 11181524.7
(22) Anmeldetag: 15.09.2011
(51) Int. Cl.: B32B 15/01, C22C 21/00, C22C 21/08, C22F 1/04, C22F 1/05, B23K 20/233, B62D 29/00

(54) **Aluminiumverbundwerkstoff mit AlMgSi-Kernlegierungsschicht**
Aluminium compound material with AIMgSi-core alloy layer
Matière première composite en aluminium dotée d'une couche d'alliage centrale AIMgSi

(43) Veröffentlichungstag der Anmeldung: 20.03.2013
(73) Patentinhaber: Hydro Aluminium Rolled Products GmbH, 41515 Grevenbroich (DE)
(72) Erfinder: Hörster, Natalie, 50859 Köln (DE); Brinkman, Henk-Jan, 53175 Bonn (DE); Schröder, Dietmar, 41515 Grevenbroich (DE); Kehl, Werner, 8061 St. Radegund bei Graz (AT); Wirtz, Thomas, 22175 Hamburg (DE); Engler, Olaf, 53229 Bonn (DE)
(74) Vertreter: Cohausz & Florack

(56) Entgegenhaltungen:
- EP-A1- 1 852 250
- EP-A1- 2 156 945
- EP-A1- 2 270 249
- JP-A- S62 207 642
- US-A- 3 093 459
- US-A1- 2010 279 143

## Beschreibung

Die Erfindung betrifft ein Band bestehend aus einem Aluminiumwerkstoff zur Herstellung von Bauteilen mit hohen Umformanforderungen und die Verwendung von Blechen hergestellt aus dem erfindungsgemäßen Band.

Vor allem im Kraftfahrzeugbau aber auch in anderen Anwendungsgebieten, beispielsweise dem Flugzeugbau oder Schienenfahrzeugbau werden Bleche aus Aluminiumlegierungen benötigt, welche sich nicht nur durch besonders hohe Festigkeitswerte auszeichnen, sondern gleichzeitig ein sehr gutes Umformverhalten aufweisen und hohe Umformgrade ermöglichen. Im Kraftfahrzeugbau sind typische Anwendungsgebiete die Karosserie und Fahrwerkteile. Bei sichtbaren, lackierten Bauteilen, beispielsweise außen sichtbaren Karosserieblechen, kommt hinzu, dass das Umformen der Werkstoffe so erfolgen muss, dass die Oberfläche nach der Lackierung nicht durch Fehler wie Fließfiguren oder Zugrilligkeit (Roping) beeinträchtigt ist. Dies ist beispielsweise für die Verwendung von Aluminiumlegierungsblechen zur Herstellung von Motorhauben und anderen Karosseriebauteilen eines Kraftfahrzeuges besonders wichtig. Es schränkt die Werkstoffwahl hinsichtlich der Aluminiumlegierung allerdings ein. Insbesondere AlMgSi-Legierungen, deren Hauptlegierungsbestandteile Magnesium und Silizium sind, weisen relativ hohe Festigkeiten auf im Zustand T6 bei gleichzeitig gutem Umformverhalten im Zustand T4 sowie hervorragender Korrosionsbeständigkeit. AlMgSi-Legierungen sind die Legierungstypen AA6XXX, beispielsweise der Legierungstyp AA6016, AA6014, AA6181, AA6060 und AA6111.

Üblicherweise werden Aluminiumbänder aus einer AlMgSi-Legierung durch Gießen eines Walzbarrens, Homogenisieren des Walzbarrens, Warmwalzen des Walzbarrens und ein optionales Kaltwalzen des Warmbandes hergestellt. Die Homogenisierung des Walzbarrens erfolgt bei einer Temperatur von 380 bis 580 °C für mehr als eine Stunde. Durch ein abschließendes Lösuńgsglühen bei einer typischen Temperatur von 500 °C bis 570 °C mit nachfolgendem Abschrecken und Kaltauslagern etwa bei Raumtemperatur für mindestens drei Tage können die Bänder im Zustand T4 ausgeliefert werden. Der Zustand T6 wird nach dem Abschrecken durch eine Warmauslagerung bei Temperaturen zwischen 100 °C und 220 °C eingestellt.

Problematisch ist, dass in warmgewalzten Aluminiumbändern aus AlMgSi-Legierungen grobe Mg₂Si-Ausscheidungen vorliegen, welche im anschließenden Kaltwalzen durch hohe Umformgrade gebrochen und verkleinert werden. Warmbänder einer AlMgSi-Legierung werden in der Regel in Dicken von 3 mm bis 12 mm hergestellt und einem Kaltwalzen mit hohen Umformgraden zugeführt. Da der Temperaturbereich, in dem die AlMgSi-Phasen entstehen, beim konventionellen Warmwalzen sehr langsam durchlaufen wird, nämlich nach dem Aufwickeln des Warmbandes, bilden sich diese Phasen sehr grob aus. Der Temperaturbereich zur Bildung der obengenannten Phasen ist legierungsabhängig. Er liegt aber zwischen 550°C und 230°C also im Bereich der Warmwalztemperaturen. Es konnte experimentell nachgewiesen werden, dass diese groben Phasen im Warmband die Dehnung des Endprodukts negativ beeinflussen. Das bedeutet, dass das Umformverhalten von Aluminiumbändern aus AlMgSi-Legierungen bisher nicht vollständig ausgeschöpft werden konnte.

In der veröffentlichten europäischen Patentanmeldung EP 2 270 249 A1, welche auf die Anmelderin zurückgeht, wurde vorgeschlagen, dass das AlMgSi-Legierungsband unmittelbar nach dem Ablauf aus dem letzten Warmwalzstich eine Temperatur von maximal 130°C aufweist und mit dieser oder einer geringeren Temperatur aufgewickelt wird. Durch das Abschrecken des Warmbandes mit diesem Verfahren konnten Aluminiumbänder im Zustand T4 hergestellt werden, welche im Zustand T4 eine Bruchdehnung von Aso von mehr als 30% oder eine Gleichmaßdehnung A_{g} von mehr als 25% aufweisen. Darüber hinaus ergaben sich auch im Zustand T6 sehr hohe Werte für die Gleichmaßdehnung A_{g} und die Bruchdehnung A₈₀. In den genannten Anwendungsgebieten besteht jedoch zusätzlich die Problematik, dass häufig starke Biegungen und Bördelungen benötigt werden. Eine typische Anwendung, die Biegungen und Bördelungen sowie hohe Anforderungen an die Umformbarkeit umfasst, ist beispielsweise ein Tür-Innen-Bauteil eines Kraftfahrzeugs. Im Biegeversuch konnten mit bisherigen AlMgSi-Legierungsbändern zwar schon gute Ergebnisse erzielt werden, eine weitere Verbesserung des Biegeverhaltens, insbesondere unter Berücksichtigung der genannten Anwendung wäre jedoch wünschenswert.

In der EP 2 156 945 A1 wird zur Verbesserung der Falzbarkeit von Blechen, welche eine hohe Festigkeit aufweisen, vorgeschlagen, einen Verbund aus einer Kernschicht aus einer AA 6XXX Legierung und mindestens einer Plattierschicht, welche ebenfalls aus einer AA 6xxx Legierung besteht, vorzusehen.

Die US 2010/0279143 A1 betrifft einen zwei- oder dreischichtigen Verbundwerkstoff mit einer Kernschicht bestehend aus einer AlMgSi-Legierung und einer nichtaushärtbaren Aluminiumlegierungschicht. Darüber hinaus wird in der genannten US-Schrift auch die Kombination aus einer AlMn-aluminiumlegierung als Kernschicht mit mindestens einer äußeren AlMgSi-Schicht beschrieben. Hinweise auf ein besonders gutes Umformverhalten einer Kombination aus aushärtbaren und nicht aushärtbaren Aluminiumlegierungsschichten werden nicht offenbart.

Die EP 1 852 250 A1 betrifft einen Verbund aus einer Kernschicht und mindestens einer aushärtbaren Plattierschicht, wobei sowohl die Kernschicht als auch die Plattierschicht aus einer AA6000-Legierung besteht.

Hiervon ausgehend liegt der vorliegenden Erfindung daher die Aufgabe zugrunde, ein Band bestehend aus einem Aluminiumwerkstoff zur Herstellung von Bauteilen mit hohen Umformanforderungen bereitzustellen, welches ein verbessertes Biegeverhalten aufweist.

Erfindungsgemäß wird die oben aufgezeigte Aufgabe gemäß einer ersten Lehre mit einem Band nach Patentanspruch 1 und gemäß einer zweiten Lehre mit der Verwendung eines Blechs hergestellt aus einem Band nach Patentanspruch 7 gelöst.

Überraschenderweise wurde festgestellt, dass ein Band aus einem Aluminiumverbundwerkstoff mit einer Kernschicht aus einer AlMgSi-Legierung und mindestens einer ein- oder beidseitig angeordneten äußeren Aluminiumlegierungsschicht, welche aus einer nicht aushärtbaren Aluminiumlegierung bestehen, die eine geringere Zugfestigkeit im Zustand T4 als die AlMgSi-Legierung aufweisen zu einem deutlich verbesserten Biegeverhalten im Zustand T4 führen, als das unbeschichtete AlMgSi-Legierungsband. Bevorzugt ist auch die Bruchdehnung A₈₀ der äußeren Aluminiumlegierungsschichten im
rekristallisierten Zustand, also auch im Zustand T4, größer als die der Kernlegierungsschicht aus einer AlMgSi-Legierung im Zustand T4. Bei starken Biegungen des Bandes zeigt sich eine deutlich glattere und saubere Biegekante bis in den maximal erreichbaren Biegewinkel hinein. Bisher hatte man an Biegungen, wie sie beispielsweise bei Bördelungen benötigt werden, das Problem, dass Risse oder Rauigkeiten im Bereich der Biegekante auftraten. Es wird davon ausgegangen, dass die weicheren äußeren Aluminiumlegierungsschichten ein "Ausschmieren" von Unebenheiten beim Biegen ermöglichen, so dass erheblich kleinere Biegewinkel bei nahezu identischen mechanischen Eigenschaften gegenüber einem unbeschichteten Band aus einer AlMgSi-Legierung erreicht werden. Für die äußeren Schichten kommen Folienlegierungen vom Typ AA8xxx, also AA8011, AA8006, AA8079 etc. aber auch andere niedrig legierte Aluminiumlegierungen vom Typ AA1200 in Frage, die im Zustand O, also beisielweise nach einem Lösungsglühen und Abschrecken, Zugfestigkeiten im rekristallisierten Zustand von weniger als 180 MPa aufweisen. Die im Biegeversuch erreichten Biegewinkel quer zur Walzrichtung von weniger als 40° ermöglichen ein besseres Bördel- und Biegeverhalten des hergestellten Bandes im Einsatz, beispielsweise im Kraftfahrzeugbau.

Um den maximal erreichbaren Biegewinkel zu ermitteln, wurden anerkannte Verfahren aus der Automobilindustrie verwendet. Für den Biegeversuch sind zunächst Proben in der Größe von 270 mm x 60 mm quer zur Walzrichtung aus dem Band geschnitten und einer Vordehnung senkrecht zur Biegelinie, d.h. senkrecht zur Walzrichtung unterzogen worden. Die Vordehnung beträgt 10%. Anschließend wird über einen Biegestempel die Probe zwischen zwei Rollen mit einem Durchmesser von 30 mm gebogen. Der Rollenabstand beträgt dabei das Zweifache der Banddicke (Tabelle 2), bevorzugt auch das Zweifache der Banddicke der Probe zuzüglich 0,5 mm (Tabelle 3). Beim Biegen der Probe durch den Biegestempel, welcher einen Stempelradius von 0,4 mm aufweist, wird die Kraft, mit welcher der Biegestempel die Probe biegt, gemessen und nach Überschreiten eines Maximums und eines Absinkens von diesem Maximum um 30 N der Biegevorgang beendet. Anschließend wird der Öffnungswinkel der gebogenen Probe gemessen. Das Biegeverhalten der Probe wird in der Regel quer zur Walzrichtung vermessen, um eine belastbare Aussage bezüglich des Biegeverhaltens bei der Herstellung von Bauteilen mit hohen Umformungsanforderungen zu erhalten. Wie bereits ausgeführt, zeigte sich überraschenderweise, dass die aus einem erfindungsgemäßen Band hergestellten Proben deutlich geringere Biegewinkel zuließen, als die aus konventionellen, unbeschichteten AlMgSi-Legierungsband hergestellten Proben und insofern besser zu Bauteilen, beispielsweise zu einem Tür-Innen-Teil, verarbeitet werden können.

Gemäß einer ersten Ausgestaltung des erfindungsgemäßen Bandes kann ein weiter verbessertes Umformverhalten und damit ein erweiterter Anwendungsbereich dadurch bereit gestellt werden, dass das Band im Zustand T4 eine Gleichmaßdehnung von A_{g} von mehr als 25% aufweist.

Neben den guten Gleichmaßdehnungseigenschaften des erfindungsgemäßen Bandes ist für die Weiterverarbeitung zu einem fertigen, auswertbaren Produkt vorteilhaft, wenn das Band im Zustand T4 eine Dehngrenze von Rp0,2 von 70 - 140 MPa und eine Zugfestigkeit Rm von 170 - 220 MPa aufweist. Die genannten Festigkeitswerte gewährleisten einerseits eine ausreichende Steifigkeit bei der Herstellung von unterschiedlichen Bauteilen durch Umformungen, beispielsweise Tiefziehen oder Biegen. Darüber hinaus sind die benötigten Umformkräfte aufgrund der Dehngrenze Rp0,2 von 70 - 140 MPa moderat.

Noch größere Umformgrade können gemäß einer nächsten Ausführungsform des erfindungsgemäßen Bandes dadurch erreicht werden, dass das Band eine Bruchdehnung A₈₀ quer zur Walzrichtung von mindestens 27%, vorzugsweise mindestens 29% aufweist.

Gemäß einer weiteren vorteilhaften Ausgestaltung des erfindungsgemäßen Bandes beträgt die Dicke der ein- oder beidseitig angeordneten, äußeren Aluminiumlegierungsschichten jeweils 5% - 15% der Enddicke des Bandes. Hierdurch wird gewährleistet, dass im Wesentlichen die Umformeigenschaften und die Festigkeitseigenschaften der Kernlegierungsschicht aus einer AlMgSi-Legierung das Herstellverfahren und die späteren Produkteigenschaften bestimmen, so dass die Vorzüge der aushärtbaren Kernlegierung zur Geltung kommen.

Darüber hinaus ist es gemäß einer weiteren Ausführungsform des erfindungsgemäßen Bandes für das Erzielen der maximal erreichbaren Biegewinkel vorteilhaft, dass die äußeren Aluminiumlegierungsschichten eine mittlere Korngröße von weniger als 50 µm, vorzugsweise weniger als 25 µm aufweisen. Es konnte festgestellt werden, dass je feinkörniger die äußere Aluminiumlegierungsschicht aufgebaut ist, die erreichbaren Biegewinkel verringert werden konnten.

Besteht gemäß einem weiteren Ausführungsbeispiel die mindestens eine äußere Aluminiumlegierungsschicht aus einer Aluminiumlegierung vom Typ AA8079 kann beispielsweise eine besonders feinkörnige Aluminiumlegierungsschicht bereitgestellt werden, welche das Biegeverhalten optimal beeinflusst. Die Aluminiumlegierung AA8079 weist die folgenden Legierungsbestandteile in Gew.-% auf:
0,05 % ≤ Si ≤ 0,30 %,
0,7 % ≤ Fe ≤ 1,3 %,
   Cu ≤ 0,05 %,
   Zn ≤ 0,10 %,

Rest Al sowie unvermeidbare Verunreinigungen einzeln maximal 0,05 und in Summe maximal 0,15 %. Die AA8079 ist eine typische Folienlegierung wie auch die Aluminiumlegierungen AA8011 und AA8006.

Die Kernschicht des erfindungsgemäßen Bandes besteht aus einer Aluminiumlegierung vom Typ AA6014, AA6016, AA6060, AA6111 oder AA6181. Allen Legierungstypen AA6xxx ist gemein, dass sie ein besonders gutes Umformverhalten gekennzeichnet durch hohe Dehnungswerte im Zustand T4 sowie hohe Festigkeiten bzw. Dehngrenzen im Einsatzzustand T6, beispielsweise nach einem Warmauslagern bei 205°C/30 min. aufweisen.

Eine Aluminiumlegierung vom Typ AA6016 weist folgende Legierungsbestandteile in Gewichtsprozent auf:
0,25 % ≤ Mg ≤ 0,6 %,
1,0 % ≤ Si ≤ 1,5 %,
   Fe ≤ 0,5 %,
   Cu ≤ 0,2 %,
   Mn ≤ 0,2 %,
   Cr ≤ 0,1 %,
   Zn ≤ 0,1 %,
   Ti ≤ 0,1 %
und Rest Al sowie unvermeidbare Verunreinigungen maximal in Summe 0,15 %, einzeln maximal 0,05 %.

Bei Magnesiumgehalten von weniger als 0,25 Gew.-% ist die Festigkeit des Aluminiumbandes, welches für Strukturanwendungen vorgesehen ist zu gering, andererseits verschlechtert sich die Umformbarkeit bei Magnesiumgehalten oberhalb von 0,6 Gew.-%. Silizium ist im Zusammenspiel mit Magnesium im Wesentlichen für die Aushärtbarkeit der Aluminiumlegierung verantwortlich und somit auch für die hohen Festigkeiten, welche im Anwendungsfall beispielsweise nach einem Lackiereinbrennen erzielt werden können. Bei Si-Gehalten von weniger als 1,0 Gew.-% ist die Aushärtbarkeit des Aluminiumbandes verringert, so dass im Anwendungsfall nur verringerte Festigkeiten bereitgestellt werden können. Si-Gehalte von mehr als 1,5 Gew.-% führen zu keiner Verbesserung des Aushärteverhaltens. Der Fe-Anteil sollte auf maximal 0,5 Gew-% begrenzt werden, um grobe Ausscheidungen zu verhindern. Eine Beschränkung des Kupfergehalts auf maximal 0,2 Gew.-% führt vor allem zu einer verbesserten Korrosionsbeständigkeit der Aluminiumlegierung in der spezifischenAnwendung. Der Mangangehalt von weniger als 0,2 Gew.-% verringert die Tendenz zur Bildung von gröberen Mangangausscheidungen. Chrom sorgt zwar für ein feines Gefüge, ist aber auf 0,1 Gew.-% zu beschränken, um ebenfalls grobe Ausscheidungen zu vermeiden. Das Vorhandensein von Mangan verbesserte dagegen die Schweißbarkeit durch Verringerung der Rissneigung beziehungsweise Abschreckempfindlichkeit des erfindungsgemäßen Aluminiumbandes. Eine Reduzierung des Zink-Gehaltes auf maximal 0,1 Gew.-% verbessert insbesondere die Korrosionsbeständigkeit der Aluminiumlegierung bzw. des fertigen Blechs in der jeweiligen Anwendung. Dagegen sorgt Titan für eine Kornfeinung während des Gießens, sollte aber auf maximal 0,1 Gew.-% beschränkt werden, um eine gute Gießbarkeit der Aluminiumlegierung zu gewährleisten.

Eine Aluminiumlegierung vom Typ AA6060 weist folgende Legierungsbestandteile in Gewichtsprozent auf:
0,35 % ≤ Mg ≤ 0,6 %,
0,3 % ≤ Si ≤ 0,6 %,
0,1 % ≤ Fe ≤ 0,3 %
   Cu ≤ 0,1 %,
   Mn ≤ 0,1 %,
   Cr ≤ 0,05 %,
   Zn ≤ 0,10 %,
   Ti ≤ 0,1 % und
Rest Al sowie unvermeidbare Verunreinigungen maximal in Summe 0,15 %, einzeln maximal 0,05 %.

Die Kombination aus genau vorgegebenem Magnesiumgehalt mit einem im Vergleich zur ersten Ausführungsform reduzierten Si-Gehalt und eng spezifiziertem Fe-Gehalt ergibt eine Aluminiumlegierung, bei welcher besonders gut die Bildung Mg₂Si Ausscheidungen nach dem Warmwalzen mit dem erfindungsgemäßen Verfahren verhindert werden kann, so dass ein Blech mit einer verbesserten Dehnung und hohen Dehngrenzen im Vergleich zu konventionell hergestellten Blechen bereitgestellt werden kann. Die geringeren Obergrenzen der Legierungsbestandteile Cu, Mn und Cr verstärken den Effekt des erfindungsgemäßen Verfahrens zusätzlich. Hinsichtlich der Auswirkungen der Obergrenze von Zn und Ti wird auf die Ausführungen zur ersten Ausführungsform der Aluminiumlegierung verwiesen.

Eine Aluminiumlegierung vom Typ AA6014 weist folgende Legierungsbestandteile in Gewichtsprozent auf:
0,4 % ≤ Mg ≤ 0,8 %,
0,3 % ≤ Si ≤ 0,6 %,
   Fe ≤ 0,35 %
   Cu ≤ 0,25 %,
0,05 % ≤ Mn ≤ 0,20 %,
   Cr ≤ 0,20 %,
   Zn ≤ 0,10 %,
0,05 % ≤ V ≤ 0,20 %,
   Ti ≤ 0,1 % und
Rest Al sowie unvermeidbare Verunreinigungen maximal in Summe 0,15 %, einzeln maximal 0,05 %.

Eine Aluminiumlegierung vom Typ AA6181 weist folgende Legierungsbestandteile in Gewichtsprozent auf:
0,6 % ≤ Mg ≤ 1,0 %,
0,8 % ≤ Si ≤ 1,2 %,
   Fe ≤ 0,45 %
   Cu ≤ 0,10 %,
   Mn ≤ 0,15 %,
   Cr ≤ 0,10 %,
   Zn ≤ 0,20 %,
   Ti ≤ 0,1 % und
Rest Al sowie unvermeidbare Verunreinigungen maximal in Summe 0,15 %, einzeln maximal 0,05 %.

Eine Aluminiumlegierung vom Typ AA6111 weist folgende Legierungsbestandteile in Gewichtsprozent auf:
0,5 % ≤ Mg ≤ 1,0 %,
0,7 % ≤ Si ≤ 1,1 %,
   Fe ≤ 0,40 %
0,50 % ≤ Cu ≤ 0,90 %,
0,15 % ≤ Mn ≤ 0,45 %,
   Cr ≤ 0,10 %,
   Zn ≤ 0,15 %,
   Ti ≤ 0,1 % und
Rest Al sowie unvermeidbare Verunreinigungen maximal in Summe 0,15 %, einzeln maximal 0,05 %. Die Legierung AA6111 zeigt grundsätzlich augrund des erhöhten Kupfergehaltes höhere Festigkeitswerte im Einsatzzustand T6, ist aber als korrosionsanfälliger anzustufen.

Alle aufgezeigten Aluminiumlegierungen sind spezifisch in ihren Legierungsbestandteilen auf unterschiedliche Anwendungen angepasst. Wie bereits ausgeführt, zeigen Bänder aus diese Aluminiumlegierungen, welche unter Verwendung des erfindungsgemäßen Verfahrens hergestellt wurden, besonders hohe Gleichmaßdehnungswerte im Zustand T4 gepaart mit einer besonders ausgeprägten Steigerung der Dehngrenze beispielsweise nach einem Warmauslagern bei 205 °C / 30 Min.. Dies gilt auch für die nach dem Lösungsglühen einer Wärmebehandlung unterzogenen Aluminiumbändern im Zustand T4.

Das erfindungsgemäße Band kann mit einem Verfahren hergestellt werden, bei welchem ein Walzbarren aus einer entsprechenden AlMgSi-Legierung gegossen wird, der Walzbarren einer Homogenisierung unterzogen wird, ein- oder beidseitig auf den Walzbarren mindestens eine Plattierschicht aufgelegt wird und der Walzbarren gemeinsam mit den aufgelegten Plattierschichten auf Warmwalztemperatur gebracht, warmgewalzt, anschließend optional auf Enddicke kaltgewalzt und das fertig gewalzte Band lösungsgelüht und abgeschreckt wird, wobei die mindestens eine Plattierschicht aus einer entsprechenden, nicht aushärtbaren Aluminiumlegierung besteht, welche eine geringere Zugfestigkeit im Zustand T4 als die Kernschicht aus einer AlMgSi-Legierung besitzt, das Warmband unmittelbar nach dem Auslauf aus dem letzten Warmwalzstich eine Temperatur von maximal 250°C vorzugsweise eine Temperatur von maximal 230, besonders bevorzugt eine Temperatur von 230 - 200°C aufweist und das Warmband mit dieser oder einer geringeren Temperatur aufgewickelt wird. Prinzipiell kann das Band auch auf eine Temperatur von weniger als 200°C abgekühlt werden. Darüber hinaus ist vorstellbar, das Band aus einem Aluminiumverbundwerkstoff auch durch Anwendung eines simultanen Gießens herzustellen und anschließend warmzuwalzen.

Es hat sich gezeigt, dass das Abschrecken des Warmbandes auch nach einem Walzplattieren, bei welchem Warmwalztemperaturen verwendet werden, zu einem besonders günstigen Gefüge des Warmbandes führt, welches besonders hohe Bruchdehnungswerte A₈₀, Gleichmaßdehnungswerte A_{g} und zusätzlich aufgrund der äußeren Aluminiumlegierungsschichten ein verbessertes Biegeverhalten aufweist. Der Temperaturkorridor des Warmbandes unmittelbar nach dem Auslauf aus dem letzten Warmwalzstich, welcher auch von 135°C - 250°C erstreckt, ließ auch bei der Produktion von Aluminiumverbundwerkstoffen eine hohe Produktionsrate bei gleichzeitig guter Prozesssicherheit zu.

Gemäß einer weiteren Ausgestaltung des Verfahrens wird ein prozesssicheres Abkühlen dadurch erzielt, dass das Warmband unter Verwendung von mindestens einem Platinenkühler und der mit Emulsion beaufschlagten Warmwalzstiche selbst auf Aufwickeltemperatur abgeschreckt wird. Ein Platinenkühler besteht aus einer Anordnung von Kühl- bzw. Schmiermitteldüsen, welche eine Walzemulsion auf das Aluminiumlegierungsband sprühen. Der Platinenkühler kann in einem Warmwalzwerk vorhanden sein, um gewalzte Warmbänder vor dem Warmwalzen auf Walztemperatur zu kühlen und um höhere Produktionsgeschwindigkeiten erreichen zu können.

Liegt die Warmwalztemperatur des Warmbandes vor dem Abkühlprozess während des Warmwalzens gemäß einer weiteren Ausgestaltung des Verfahrens, insbesondere vor dem vorletzten Warmwalzstich bei mindestens 230°C, vorzugsweise über 400°C, können besonders kleine Mg₂Si-Ausscheidungen im abgeschreckten Warmband erzeugt werden, da der größte Teil der Legierungsbestandteile Magnesium und Silizium bei diesen Temperaturen in gelöstem Zustand in der Aluminiummatrix vorliegen. Dieser vorteilhafte Zustand des Warmbandes wird besonders bei Temperaturen von 470°C - 490°C vor dem Start des Abkühlprozesses, welcher vorzugsweise innerhalb der letzten beiden Walzstiche stattfindet, erreicht und durch das Abschrecken quasi eingefroren.

Gemäß einer weiteren Ausgestaltung des Verfahrens beträgt die Warmwalztemperatur des Warmbandes nach dem vorletzten Walzstich 290°C - 310°C. Es hat sich gezeigt, dass diese Temperaturen sowohl eine ausreichendes Einfrieren der Ausscheidungen ermöglicht und andererseits gleichzeitig der letzte Walzstich ohne Probleme durchgeführt werden kann. Am Auslauf kann das Warmband gemäß einer nächsten vorteilhaften Ausführungsform eine Temperatur von 230°C - 200°C aufweisen, so dass eine maximale Prozessgeschwindigkeit beim Warmwalzen realisiert werden kann, ohne die Eigenschaften im Zustand T4 des hergestellten Band aus einem Aluminiumverbundwerkstoff zu verschlechtern.

Gemäß einer weiteren Ausgestaltung des Verfahrens wird das fertig gewalzte Aluminiumband einer Wärmebehandlung unterzogen, wobei das Aluminiumband nach dem Lösungsglühen und Abschrecken auf mehr als 100 °C erwärmt wird und anschließend mit einer Temperatur von mehr als 55 °C, vorzugsweise mehr als 85 °C aufgewickelt und ausgelagert wird. Diese Ausführungsform des Verfahrens ermöglicht es nach der Kaltauslagerung durch eine kürzere Erwärmungsphase mit niedrigeren Temperaturen den Zustand T6 in dem Band oder Blech einzustellen, in welchem die zu Bauteilen umgeformten Bleche oder Bänder in der Anwendung eingesetzt werden. Diese schnell aushärtenden Aluminiumbänder werden hierzu lediglich auf Temperaturen von etwa 185 °C für lediglich 20 Min. erwärmt, um die höheren Streckgrenzwerte im Zustand T6 zu erreichen.

Die Dicke des fertigen Warmbandes beträgt 3 mm - 12 mm, vorzugsweise 5 mm - 8 mm, so dass übliche Kaltwalzgerüste für das Kaltwalzen verwendet werden können.

Bei dem Verfahren zur Herstellung eines erfindungsgemäßen Bandes besteht die Kernschicht des erfindungsgemäßen Bandes aus einer Aluminiumlegierung vom Legierungstyp AA6014, AA6016, AA6060, AA6111 oder AA6181 und die äußeren Aluminiumlegierungsschichten aus einem Legierungstyp AA8xxx oder AA1200. Selbstverständlich sind sowohl unterschiedlich dicke äußere Aluminiumlegierungsschichten und/oder aus unterschiedlichen Aluminiumlegierungen vom Typ AA8xxx oder AA1200 bestehende äußere Aluminiumlegierungsschichten einsetzbar. Darüber hinaus ergibt die Kombination der genannten Legierungstypen beim Aluminiumlegierungsverbundwerkstoff ein hervorragendes Biegeverhalten bei gleichzeitig sehr hohem Umformvermögen im Zustand T4.

Schließlich wird gemäß einer zweiten Lehre der vorliegenden Erfindung die oben aufgezeigte Aufgabe durch die Verwendung eines Blechs hergestellt aus einem erfindungsgemäßen Band als Bauteil, Fahrwerks-, Strukturteil oder Blech im Kraftfahrzeug-, Flugzeug- oder Schienenfahrzeugbau, insbesondere als Komponente, Fahrwerksteil, Außen- oder Innenblech im Kraftfahrzeugbau, vorzugsweise als Karosseriebauelement verwendet. Wie bereits zuvor ausgeführt, zeichnet sich das erfindungsgemäße Band aus einem Aluminiumwerkstoff nicht nur durch außergewöhnliche Umformeigenschaften, beispielsweise eine sehr hohe Gleichmaßdehnung A_{g} quer zur Walzrichtung aus, darüber hinaus können mit dem erfindungsgemäßen Band extreme Biegewinkel realisiert werden, welche in den zuvor genannten Anwendungen, insbesondere bei gebördelten Falzen auftreten. Ferner lassen sich auch kleine Radien im Bauteil besser realisieren.

Die Erfindung soll nun anhand von Ausführungsbeispielen in Verbindung mit der Zeichnung näher erläutert werden. Die Zeichnung zeigt in
- Fig. 1 a-e): schematisch den Ablauf eines Ausführungsbeispiels des erfindungsgemäßen Verfahrens,
- Fig. 2: einen Längsschliff eines erfindungsgemäßen Bandes anodisiert nach Barker mit polarisiertem Licht,
- Fig. 3: in einer perspektivischen Darstellung die Versuchsanordnung zur Durchführung des Biegeversuchs,
- Fig. 4: in einer perspektivischen schematischen Darstellung die Anordnung des Biegestempels im Verhältnis zur Walzrichtung bei der Durchführung des Biegeversuchs und
- Fig. 5: schematisch die Messung des Biegewinkels an einer gebogenen Probe gemäß einem weiteren Ausführungsbeispiel.

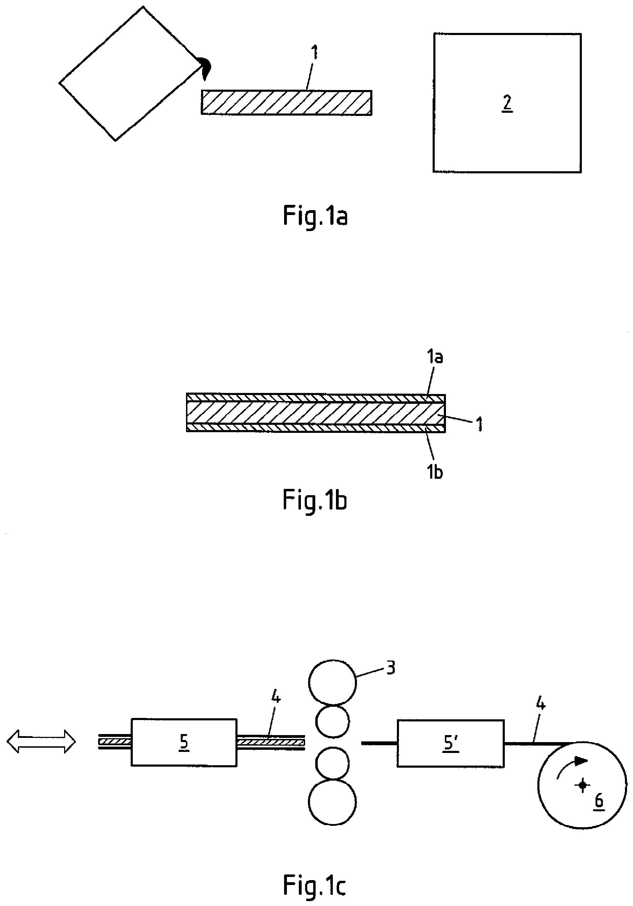

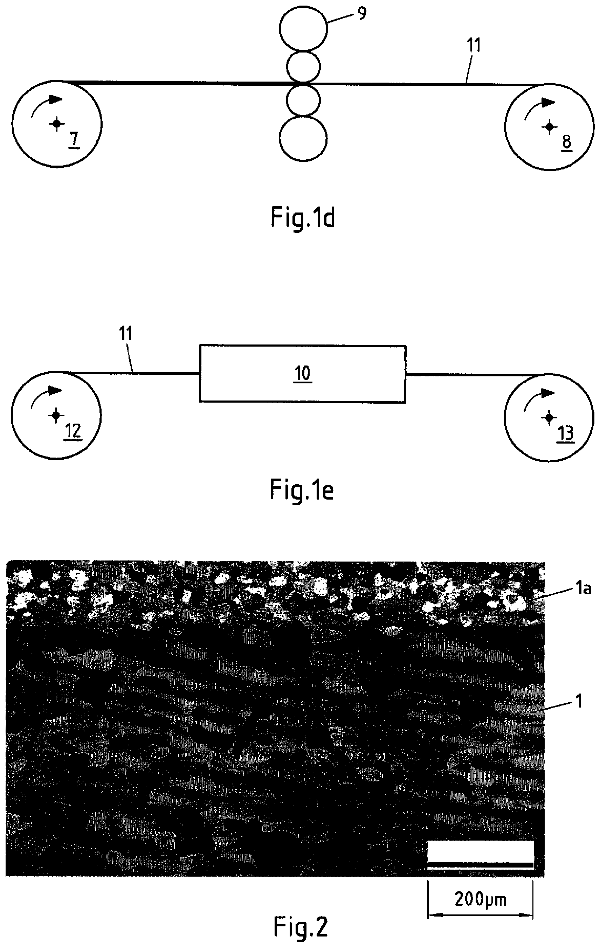

Fig. 1 a) bis e) zeigt zunächst ein schematisches Ablaufdiagramm eines Ausführungsbeispiels des erfindungsgemäßen Verfahrens zur Herstellung eines Bandes gemäß der vorliegenden Erfindung mit den Schritten a) Herstellen und Homogenisieren des Walzbarrens, b) Auflegen der Plattierschichten auf den Walzbarren, c) Warmwalzen bzw. Walzplattieren des Walzbarrens, d) Kaltwalzen und e) Lösungsglühen mit Abschrecken.

Zunächst wird ein Walzbarren 1 aus einer Aluminiumlegierung mit folgenden Legierungsbestandteilen in Gew.-% gegossen:
0,25 % ≤ Mg ≤ 0,6%,
1,0 % ≤ Si ≤ 1,5 %,
   Fe ≤ 0,5%,
   Cu ≤ 0,2 %,
   Mn ≤ 0,2 %,
   Cr ≤ 0,1 %,
   Zn ≤ 0,1 %,
   Ti ≤ 0,1 % und
Rest Al sowie unvermeidbare Verunreinigungen maximal in Summe 0,15 %, einzeln maximal 0,05 %.

Der so hergestellte Walzbarren wird bei einer Homogenisierungstemperatur von etwa 550°C für 8 h in einem Ofen 2 homogenisiert, so dass die zulegierten Legierungsbestandteile besonders homogen verteilt im Walzbarren vorliegen, Fig. 1a). In Fig. 1b) ist nun dargestellt, dass Aluminiumlegierungsschichten 1a und 1b auf den Walzbarren 1 aufgelegt worden sind, so dass diese mit dem Walzbarren verschweißt werden können beim Warmwalzen. Die Aluminiumlegierungsschichten 1a und 1b bestehen beispielsweise aus Aluminiumlegierungen vom Typ AA8079, die im Werkstoffzustand O, welcher dem Zustand T4 nach dem Lösungsglühen entspricht, eine geringere Zugfestigkeit Rm als die der AlMgSi-Legierungschicht, also beispielsweise weniger als 180 MPa aufweisen. Allerdings sind auch andere Aluminiumlegierungen für die äußeren Aluminiumlegierungsschichten denkbar, beispielsweise AA1200.

Der Walzbarren 1 mit den aufgelegten Aluminiumlegierungsschichten bzw. Plattierschichten wird in dem erfindungsgemäßen, in Fig. 1c) dargestellten Ausführungsbeispiel durch ein Warmwalzgerüst 3 reversierend warmgewalzt, wobei der Walzbarren 1 eine Temperatur von 400 - 550°C während des Warmwalzens aufweist. In diesem Ausführungsbeispiel hat nach Verlassen des Warmwalzgerüstes 3 und vor dem vorletzten Warmwalzstich das Warmband 4 vorzugsweise eine Temperatur von mindestens 400°C, vorzugsweise 470°C - 490°C. Bevorzugt erfolgt bei dieser Warmbandtemperatur die Abschreckung des Warmbandes 4 unter Verwendung eines Platinenkühlers 5 und der Arbeitswalzen des Warmwalzgerüstes 3. Beispielsweise wird das Warmband hier auf eine Temperatur von 290°C - 310°C vor dem letzten Warmwalzstich abgekühlt, sodass dieser ohne Schwierigkeiten prozesssicher durchgeführt werden kann und das Warmband dabei weiter gekühlt werden kann. Hierzu besprüht der Platinenkühler 5, nur schematisch dargestellt, das Warmband mit kühlender Walzemulsion und sorgt für eine beschleunigte Abkühlung des Warmbandes auf die zuletzt genannten Temperaturen. Die Arbeitswalzen des Warmwalzgerüstes sind ebenfalls mit Emulsion beaufschlagt und Kühlen das Warmband 4 beim letzten Warmwalzstich weiter herunter. Nach dem letzten Walzstich hat das Warmband 4 am Ausgang des Platinenkühlers 5' im vorliegenden Ausführungsbeispiel eine Temperatur von 230 °C - 200°C und wird anschließend über die Aufwickelhaspel 6 mit dieser Temperatur aufgewickelt.

Dadurch, dass das Warmband 4 unmittelbar am Auslauf des letzten Warmwalzstichs eine Temperatur von mehr als 135°C - 250°C, bevorzugt 200°C - 330°C aufweist, bzw. optional in den letzten beiden Warmwalzstichen unter Verwendung des Platinenkühlers und der Arbeitswalzen des Warmwalzgerüstes 3 auf die genannten Temperaturen gebracht wird, weist das Warmband 4 trotz der erhöhten Aufwickeltemperatur einen Kristallgefügezustand auf, welcher zu sehr guten Gleichmaßdehnungswerten A_{g} im Zustand T4 von mehr als 23%, vorzugsweise mehr als 25% führt. Trotz des eingefrorenen Gefügezustands kann das Warmband bei den genannten Temperaturen mit relativ hoher Geschwindigkeit verarbeitet und aufgewickelt werden. Das Warmband mit einer Dicke von 3 - 12 mm, vorzugsweise 5 - 8 mm wird über die Aufwickelhaspel 6 aufgewickelt. Da sich bei den relativ niedrigen Aufwickeltemperaturen keine groben Mg₂Si-Ausscheidungen bilden können, weist die Kernlegierungsschicht, einen besonders vorteilhaften Kristallzustand auf und kann daher beispielsweise unter Verwendung eines Kaltwalzgerüstes 9 besonders gut kaltgewalzt und wieder auf einer Aufwickelhaspel 8 aufgewickelt werden, Fig. 1d).

Das resultierende, kaltgewalzte Band 11 wird aufgewickelt. Anschließend wird es einem Lösungsglühen bei einer Temperatur von typisch 500 °C bis 570 °C und einem Abschrecken 10 zugeführt, Fig. 1e). Hierzu wird es erneut vom Coil 12 abgewickelt, in einem Ofen 10 lösungsgeglüht und abgeschreckt wieder zu einem Coil 13 aufgewickelt. Das Aluminiumband kann dann nach einer Kaltauslagerung bei Raumtemperatur im Zustand T4 mit maximaler Umformbarkeit ausgeliefert werden.

Bei größeren Aluminiumbanddicken, beispielsweise bei Fahrwerksanwendungen oder Komponenten wie beispielsweise Bremsankerplatten können auch alternativ Stückglühungen durchgeführt werden und die Bleche anschließend abgeschreckt werden.

Im Zustand T6, welcher durch eine Warmauslagerung bei 100°C - 220°C erreicht wird, erfährt das erfindungsgemäße Band eine weitere Steigerung im Bezug auf die Werte der Dehngrenze, so dass besonders hohe Festigkeiten erreicht werden. Die Warmauslagerung kann beispielsweise bei 205°C für 30 min. erfolgen. Die gemäß dem hier dargestellten Ausführungsbeispiel hergestellten Bänder aus einem Aluminiumlegierungsverbundwerkstoff weisen nach dem Kaltwalzen beispielsweise eine Dicke von 0,5 mm - 4,5 mm auf. Banddicken von 0,5 - 2 mm werden üblicherweise für Karosserieanwendungen bzw. Banddicken 2,0 mm - 4,5 mm für Fahrwerksteile im Kraftfahrzeugbau verwendet. In beiden Anwendungsbereichen sind die verbesserten Gleichmaßdehnungswerte bei der Herstellung der Bauteile von entscheidendem Vorteil, da zumeist starke Umformungen der Bleche durchgeführt werden und trotzdem hohe Festigkeiten im Einsatzzustand T6 des Endprodukts benötigt werden. Hierzu gesellt sich noch die verbesserte Biegefähigkeit der erfindungsgemäßen Bänder, welche wie bereits oben ausgeführt, besonders kleine Biegewinkel ermöglichen.

Zur Realisierung des verbesserten Biegeverhaltens ist es vorteilhaft, wenn die äußeren Aluminiumlegierungsschichten Korngrößen von weniger als 50 µm, vorzugsweise weniger als 25 µm aufweisen. Einen Längsschliff nach Barker durch ein Ausführungsbeispiel eines erfindungsgemäß hergestellten Bandes 1 zeigt Fig. 2 in einer stark vergrößerten Ansicht. Deutlich ist zu erkennen, dass die äußere Aluminiumlegierungsschicht 1a, welche hier durch eine Aluminiumlegierung vom Typ AA8079 gebildet wird, eine sehr viel geringere Korngröße als die Kernlegierungsschicht aufweist. In diesem Ausführungsbeispiel sind mittlere Korngrößen von etwa 20 µm gemessen worden.

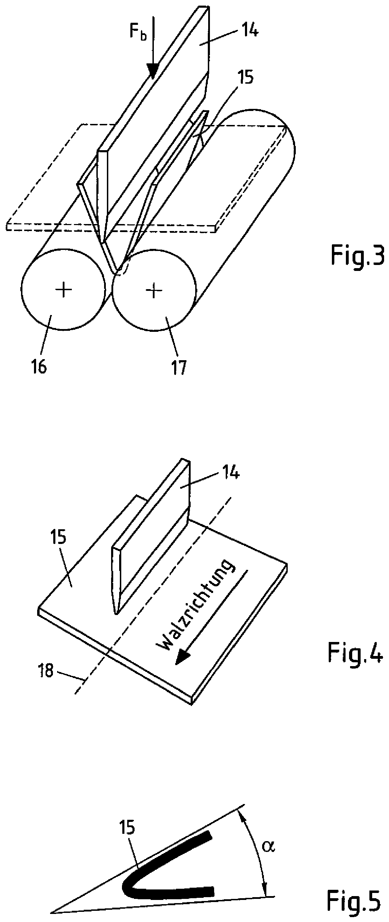

Fig. 3 zeigt, in einer perspektivischen Ansicht die Versuchsanordnung zur Durchführung der Biegeversuche zur Ermittlung des maximalen Biegewinkels. Die Versuche lehnen sich an die Spezifikation der Verband deutscher Automobilindustrie(VDA) 238-100 an. Die Versuchsanordnung besteht aus einem Biegestempel 14, welcher im vorliegenden Fall einen Stempelradius von 0,4 mm aufweist. Die Probe 15 wurde zuvor quer zur Walzrichtung mit einer Größe von 270 mm x 60 mm ausgeschnitten. Anschließend wurde die Probe 15 einer Vordehnung quer zur Walzrichtung von 10 % mit einer Vordehnungsgeschwindigkeit von 25 mm/min und einer freien Einspannlänge von 150 mm gedehnt. Anschließend wurde daraus die Probe 15 auf eine Größe von 60 x 60 mm zugeschnitten und der Biegevorrichtung zugeführt. Der Biegestempel 14, welcher wie in Fig. 4 dargestellt, parallel zur Walzrichtung verläuft, so dass die Biegelinie 18 ebenfalls parallel zur Walzrichtung verläuft, drückt nun mit einer Kraft F_{b} die Probe zwischen zwei Rollen 16, 17 mit einem Rollendurchmesser von 30 mm, welche in einem Abstand von der zweifachen Probendicke (Tabelle 2) oder der zweifachen Probendicke plus 0,5 mm (Tabelle 3) angeordnet sind. Während der Biegestempel 14 die Probe 15 biegt, wird die Stempelkraft F_{b} gemessen. Erreicht die Stempelkraft F_{b} ein Maximum und fällt diese dann um 30 N ab, so ist der maximal erreichbare Biegewinkel erreicht. Anschließend wird die Probe 15 aus der Biegevorrichtung entnommen und der Biegewinkel wie in Fig. 5 dargestellt vermessen.

Stellvertretend für eine typische AlMgSi-Legierung wurde die Legierung Corel als Kernlegierungsschicht verwendet, deren Legierungsbestandteile in Tabelle 1 dargestellt sind. Darüber hinaus wurden zwei verschiedene äußere Aluminiumlegierungsschichten Clad 1, Clad 2 verwendet, deren Zusammensetzung ebenfalls in Tabelle 1 dargestellt ist.

**Tabelle 1**

| **Legierung** | **Si Gew. -%** | **Fe Gew.-%** | **Cu Gew.-%** | **Mn Gew.-%** | **Mg Gew.-%** | **Cr Gew.-%** | **Zn Gew.-%** | **Ti Gew. -%** |
|---|---|---|---|---|---|---|---|---|
| **Corel** | 1,3 | 0,20 | - | 0,06 | 0,3 | - | - | 0,03 |
| **Clad1** | 0,125 | 1,11 | 0,0002 | - | - | - | 0,0029 | - |
| **Clad2** | 0,14 | 0,25 | 0,03 | 0,02 | 0,9 | - | - | - |

Unter Berücksichtigung des in Fig. 1a) - 1e) beschriebenen Verfahrens wurden Bänder hergestellt und lösungsgeglüht. Die Lösungsglühung erfolgte bei den in Tabelle 2 dargestellten Versuchsreihen im Labor an aus entsprechenden walzharten Bändern mit Enddicke herausgetrennten Blechen unter Verwendung eines Salzbades. Anschließend wurden die Proben im Wasserbecken abgeschreckt und 7 Tage ausgelagert. Dies entspricht in etwa dem Zustand T4, wie er auch in etwa bei der Verwendung eines Banddurchlaufofens in der Massenfertigung erreicht wird.

**Tabelle 2**

| **Versuch Nr** | | **Legierung** | **Glühung im Salzbad** | **Dicke** | **R_{p0,2}** | **Rₘ** | **A_{g}** | **A_{B0mm}** | **Biege-winkel** |
|---|---|---|---|---|---|---|---|---|---|
| | | | | **mm** | **N/mm²** | **N/mm²** | **%** | **%** | ° |
| **VLG1** | T4 | Corel | 60 Sek. 520° | 1,58 | 108 | 222 | 24,0 | 29,2 | 49,3 |
| **VGL2** | T4 | Core1 | 20 Sek. 540° | 1,58 | 111 | 224 | 24,4 | 29,4 | 47,5 |
| **VGL3** | T4 | Corel | 60 Sek. 540° | 1,58 | 110 | 225 | 24,7 | 30,4 | 48,5 |
| **Erf 1** | T4 | 1 Core1 + Clad1 | 60 Sek. 520° | 1,58 | 94 | 196 | 24,3 | 29,8 | 36,9 |
| **Erf 2** | T4 | Corel + Clad1 | 20 Sek. 540° | 1,58 | 93 | 199 | 25,3 | 30,9 | 37,3 |
| **Erf 3** | T4 | Core1 + Cladl | 60 Sek. 540° | 1,58 | 93 | 199 | 24,6 | 30,3 | 36,0 |
| **VGL 4** | T4 | Corel | 60 Sek. 520° | 1,50 | 103 | 213 | 24,4 | 28,6 | 50,2 |
| **VGL 5** | T4 | Corel | 20 Sek. 540° | 1,50 | 102 | 216 | 25,5 | 31,0 | 47,5 |
| **VGL 6** | T4 | Corel | 60 Sek. 540° | 1,50 | 102 | 216 | 24,7 | 29,5 | 44,3 |

Zu erkennen ist in Tabelle 2, dass die erfindungsgemäßen Ausführungsbeispiele Erf1, Erf2, Erf3 im Vergleich zu den Vergleichsbeispielen Vlg1 - Vlg6 deutlich niedrigere Biegewinkel erreicht haben, d.h. die Öffnungswinkel der gebogenen Proben waren deutlich kleiner als bei den Vergleichsbändern. Die Biegewinkel betrugen 36° bis 37,3° bei den erfindungsgemäß plattierten Legierungsbändern. Die nicht plattierten Vergleichsbeispiele zeigten dagegen lediglich minimale Biegewinkel von mehr als 44°. Die Gleichmaßdehnung A_{g} der erfindungsgemäßen Ausführungsbeispiele war trotz der beidseitig angeordneten Plattierschicht mit mehr als 24 % weiterhin sehr hoch.

**Tabelle 3**

| **Versuch Nr** | | **Legierung** | **Position im Band** | **Dicke** | **R_{p0,2}** | **Rₘ** | **A_{g}** | **A₈₀ₘₘ** | **Biege - winkel *** |
|---|---|---|---|---|---|---|---|---|---|
| | | | | **Mm** | **N/mm²** | **N/mm²** | **%** | **%** | ° |
| **Erf 5** | T4 | Core1 + Cladl | Bandanfang | 1,50 | 85 | 187 | 25,7 | 29,9 | 31,4 |
| **Erf 6** | T4 | Core1 + Cladl | Bandmitte | 1,50 | 84 | 186 | 26,0 | 29,9 | 31,5 |
| **Erf 7** | T4 | Corel + Clad2 | Bandanfang | 1,50 | 92 | 198 | 23,3 | 27,5 | 36,4 |
| **Erf 8** | T4 | Corel + Clad2 | Bandende | 1,50 | 93 | 196 | 23,2 | 27,4 | 36,3 |
| **VGL 7** | weich | AA 5182 | Bandanfang | 1,50 | 138 | 278 | 23,4 | 26,0 | 68,7 |

| | | | | | | | | | |
|---|---|---|---|---|---|---|---|---|---|
| *Biegewinkelmessung mit geändertem Rollenabstand | | | | | | | | | |

Tabelle 3 zeigt Messergebnisse von erfindungsgemäßen Ausführungsbeispielen, welche vollständig industriell hergestellt wurden, d.h. hier wurde auch der Lösungsglühschritt zur Erzielung des Zustandes T4 bei den Versuchen Erf5 bis Erf8 in einem Banddurchlaufofen realisiert. Alle in Tabelle 3 dargestellten Messungen erfolgten an Bändern mit 1,50 mm Dicke und damit an etwas dünneren Bändern im Vergleich zu den Messungen in Tabelle 2. Die Bänder Erf5 bis Erf8 wurden zudem für 19 Tage bei Raumtemperatur ausgelagert. Zum Vergleich ist in Tabelle 3 eine typische für den Automobilbau verwendete Aluminiumlegierung AA5182 vermessen worden. Bei den Biegeversuchen wurde im Unterschied zur Tabelle 2 ein geänderter Rollenabstand gewählt, welcher der zweifachen Dicke der zu messenden Probe entsprach zuzüglich 0,5 mm. Diese in der Automobilindustrie übliche Versuchsanordnung ergab sehr reproduzierbare Messergebnisse für den minimalen Biegewinkel. Für das Vergleichsbeispiel VGL7 konnte lediglich ein minimaler Biegewinkel von 68,7° erreicht werden. Die erfindungsgemäßen Ausführungsbeispiele dagegen erzielten Biegewinkel mit im Minimum 31,4° und sind damit beispielsweise für die Bereitstellung von gebördelten Falzen, wie sie häufig im Kraftfahrzeugbau vorkommen, besonders geeignet. Das verbesserte Biegeverhalten zeigt sich insbesondere auch an einem verbesserten Aussehen der Biegekante, denn diese zeigt aufgrund der feinkörnig rekristallisierten, äußeren Aluminiumlegierungsschicht ein sehr homogenes Aussehen.

## Patentansprüche

1. Band bestehend aus einem Aluminiumwerkstoff zur Herstellung von Bauteilen mit hohen Umformanforderungen,
**dadurch gekennzeichnet, dass** das Band eine Kernschicht aus einer AlMgSi-Legierung vom Legierungstyp AA6014, AA6016, AA6060, AA6111 oder AA6181 und mindestens eine ein- oder beidseitig angeordnete äußere Aluminiumlegierungsschicht aus einer nicht aushärtbaren Aluminiumlegierung aufweist, wobei die mindestens eine äußere Aluminiumlegierungsschicht aus einer Aluminiumlegierung vom Typ AA8xxx, oder AA1200 besteht, die mindestens eine äußere Aluminiumlegierungsschicht eine geringere Zugfestigkeit als die Kernschicht aus einer AlMgSi-Legierung vom Legierungstyp AA6014, AA6016, AA6060, AA6111 oder AA6181 im Zustand T4 besitzt, wobei das Band im Zustand T4 eine Gleichmaßdehnungen A_{g} von mehr als 23 % quer zur Walzrichtung aufweist sowie bei einer Dicke von 1,5 mm bis 1,6 mm einen Biegewinkel im Biegeversuch quer zur Walzrichtung von weniger als 40 ° erreicht.

2. Band nach Anspruch 1,
**dadurch gekennzeichnet, dass** das Band im Zustand T4 eine Gleichmaßdehnung A_{g} von mehr als 25 % aufweist.

3. Band nach einem der Ansprüche 1 oder 2,
**dadurch gekennzeichnet, dass** Band im Zustand T4 eine Dehngrenze von Rp0,2 von 70 bis 140 MPa und eine Zugfestigkeit Rm von 170 bis 220 MPa aufweist.

4. Band nach einem der Ansprüche 1 bis 3,
**dadurch gekennzeichnet, dass** das Band eine Bruchdehnung A₈₀ quer zur Walzrichtung von mindestens 27 %, vorzugsweise mindestens 29 % aufweist.

5. Band nach einem der Ansprüche 1 bis 3,
**dadurch gekennzeichnet, dass** die Dicke der äußeren Aluminiumlegierungsschichten jeweils 5 % bis 15 % der Enddicke des Bandes beträgt.

6. Band nach einem der Ansprüche 1 bis 4,
**dadurch gekennzeichnet, dass** die äußere Aluminiumlegierungsschichten eine mittlere Korngröße von weniger als 50 µm, vorzugsweise weniger als 25 µm aufweist.

7. Verwendung eines Blechs hergestellt aus einem Band gemäß einem der Ansprüche 1 bis 6 als Bauteil, Fahrwerks-, Strukturteil oder Blech im Kraftfahrzeug-, Flugzeug- oder Schienenfahrzeugbau, insbesondere als Komponente, Fahrwerksteil, Außen- oder Innenblech im Kraftfahrzeugbau, vorzugsweise als Karosseriebauelement.

## Claims

1. Strip consisting of an aluminium material for production of components with high forming requirements,
**characterized in that**
the strip has a core layer of an AlMgSi alloy of alloy type AA6014, AA6016, AA6060, AA6111 or AA6181 and at least one external aluminium alloy layer arranged on one or both sides and made of a non-hardenable aluminium alloy, wherein the at least one external aluminium alloy layer consists of an aluminium alloy type AA8xxx or A1200,
the at least one external aluminium alloy layer has a lower tensile strength than the core layer of an AlMgSi alloy of alloy type AA6014, AA6016, AA6060, AA6111 or AA6181 in state T4, wherein in state T4 the strip has a uniform elongation A_{g} of more than 23% transverse to the rolling direction and with a thickness of 1.5 mm to 1.6 mm, a bend angle of less than 40° is achieved in the bending test transverse to the rolling direction.

2. Strip according to claim 1, **characterised in that** the strip in state T4 has a uniform elongation A_{g} of more than 25%.

3. Strip according to any of claims 1 or 2, **characterised in that** the strip in state T4 has a yield point Rp0.2 of 70 to 140 MPa and a tensile strength Rm of 170 to 220 MPa.

4. Strip according to any of claims 1 to 3, **characterised in that** the strip has an elongation at break A₈₀ transverse to the rolling direction of at least 27%, preferably at least 29%.

5. Strip according to any of claims 1 to 3, **characterised in that** the thickness of the external aluminium alloy layers in each case amounts to 5 to 15% of the final thickness of the strip.

6. Strip according to any of claims 1 to 4, **characterised in that** the external aluminium alloy layers have a mean grain size of less than 50 pm, preferably less than 25 µm.

7. Use of a sheet produced from a strip according to any of claims 1 to 6 as a component, chassis or structural part or panel in automotive, aircraft or railway vehicle construction, in particular as component, chassis part, external or internal panel in automotive engineering, preferably as a bodywork element.

## Revendications

1. Bande constituée d'un matériau d'aluminium pour la fabrication de composants ayant des exigences de formage élevées,
**caractérisée en ce que**
la bande a une couche centrale d'un alliage AlMgSi du type d'alliage AA6014, AA6016, AA6060, AA6111 ou AA6181 et au moins une couche extérieure d'alliage d'aluminium d'un alliage d'aluminium non durcissable par vieillissement disposée sur une ou deux faces, dans laquelle la au moins une couche extérieure d'alliage d'aluminium est constituée d'un alliage d'aluminium de type AA8xxx ou AA1200, la au moins une couche extérieure d'alliage d'aluminium ayant une résistance à la traction inférieure à celle de la couche centrale d'un alliage AlMgSi du type AA6014, AA6016, AA6060, AA6111 ou AA6181 à l'état T4, la bande à l'état T4 ayant un allongement uniforme A_{g} supérieur à 23% transversalement à la direction de laminage et, à une épaisseur de 1,5 mm à 1,6 mm, réalisant un angle de flexion dans l'essai de flexion transversalement à la direction de laminage inférieur à 40°.

2. Bande selon la revendication 1,
caractérisé en ce quele
bande présente un allongement uniforme A_{g} de plus de 25 % à l'état T4.

3. Bande selon l'une des revendications 1 ou 2,
**caractérisé en ce que**
la bande à l'état T4 a une limite d'élasticité Rp0,2 de 70 à 140 MPa et une résistance à la traction Rm de 170 à 220 MPa.

4. Bande selon l'une quelconque des revendications 1 à 3,
**caractérisé en ce que**
la bande présente un allongement à la rupture A80 transversal à la direction de laminage d'au moins 27 %, de préférence d'au moins 29 %.

5. Bande selon l'une des revendications 1 à 3,caractérisée
**caractérisé en ce que**
l'épaisseur de chacune des couches extérieures en alliage d'aluminium est de 5 % à 15 % de l'épaisseur finale de la bande.

6. Bande selon l'une des revendications 1 à 4,
**caractérisé en ce que**
les couches extérieures en alliage d'aluminium ont une taille moyenne de grain inférieure à 50 m, de préférence inférieure à 25 m.

7. Utilisation d'une tôle fabriquée à partir d'une bande selon l'une des revendications 1 à 6 pour une pièce de construction, pièce de train de roulement ou de structure ou tôle dans la construction de véhicules automobiles, avions ou véhicules ferroviaires, en particulier comme composant, pièce de train de roulement, tôle extérieure ou intérieure dans la construction de véhicules automobiles, de préférence sous forme d'élément de construction de carrosserie.
